# EUROPEAN PATENT APPLICATION

(11) **EP 4 601 318 A1**
(43) Date of publication of application: **13.08.2025**
(21) Application number: 24156267.7
(22) Date of filing: 07.02.2024
(51) Int. Cl.: H04R 1/00

(54) **METHOD AND CONTROL UNIT FOR OPERATING AN EXCITER**

(71) Applicant: BSH Hausgeräte GmbH, 81739 München (DE)
(72) Inventor: Ondrejcak, Jan, 04001 Kosice (SK)

(57) **Abstract**

A control unit (111) for operating an exciter (120) is described. The control unit (111) is configured to determine response data regarding a frequency response (400) of the blocked force of the exciter (120), and to operate the exciter (120) in dependence of the response data for generating an acoustic and/or haptic signal (131).

## Description

The present document relates to a method and a corresponding control unit for controlling an exciter, notably for controlling an exciter which is part of a user interface of a household appliance.

A household appliance may comprise a touch-sensitive screen as part of a user interface. One or more virtual control elements (e.g. buttons, switches, etc.) can be provided via the touch-sensitive screen. In order to enable a convenient and reliable operation of a virtual control element, it is typically advantageous to provide a haptic and/or acoustic feedback in parallel with the actuation of the virtual control element (e.g. to simulate the clicking sound and/or the click feel of a control button). A haptic and/or acoustic feedback may be generated by one or more surface exciters.

The present document addresses the technical problem of generating a particularly precise haptic and/or acoustic signal using a surface exciter, in particular for providing a user interface of a household appliance. The technical problem is solved by each of the independent claims. Preferred examples are described in the dependent claims.

According to an aspect, a control unit for operating an (electroacoustic) exciter is described. The exciter may be configured to cause a (rigid) radiation surface, such as the front panel of a household appliance, to vibrate, in order to generate an acoustic and/or a haptic signal. The exciter may comprise a magnet which is configured to generate a (possibly constant) magnetic field. Furthermore, the exciter may comprise an electric coil which is attached to the radiation surface and which penetrates into the magnetic field of the magnet. Using a (time-varying) coil current through the coil, a movement of the coil may be triggered, thereby causing the radiation surface to vibrate and thereby generating an acoustic and/or a haptic signal.

The control unit is configured to determine response data regarding the frequency response of the blocked force of the exciter. The response data may have been pre-determined during a measurement phase and may have been stored within a storage unit (e.g., a storage unit of the household appliance). The response data may have been measured by attaching the exciter or an exciter of the same model to a (rigid) support structure, wherein the support structure has a weight which is substantially higher than the weight of the exciter, in particular having a weight which is at least 10 times or 100 times higher than the weight of the exciter. The support structure may have been used instead of the radiation surface to measure the frequency response of the blocked force of the exciter. In particular, the coil of the exciter may have been attached to the support structure (instead of to the radiation surface).

The response data may be indicative of the magnitude of the blocked force of the exciter for a plurality of different frequencies of the control signal (notably of the coil current) for operating the exciter. The plurality of frequencies may cover a pre-determined frequency range, wherein the frequency range may go from 20 Hz up to 4 kHz, in particular up to 12kHz. Hence, the plurality of frequencies may cover the audible frequency range of human beings.

Alternatively, or in addition, the response data may be indicative of the phase of the blocked force of the exciter for the plurality of different frequencies of the control signal for operating the exciter, wherein the phase of the block force may be relative to the phase of the control signal (notably the phase of the coil current).

In particular, the response data may be indicative of the magnitude and/or the phase response of the blocked force of the exciter subject to a sine sweep excitation of the exciter (wherein the sine sweep may cover the above-mentioned frequency range).

The control unit is further configured to operate the exciter in dependence of the response data for generating an acoustic and/or haptic signal. In particular, the control unit may be configured to determine target data regarding a target acoustic and/or haptic signal which is to be emitted from the radiation surface to which the exciter is coupled. The exciter may then be operated also in dependence of the target acoustic and/or haptic signal. In particular, the response data may be used to modify the target acoustic and/or haptic signal, in order to generate the control signal, in particular the (time-varying) coil current, for operating the exciter.

The frequency response of the blocked force of the exciter provides a precise indication of the dynamic properties of the exciter. By taking into account the frequency response of the blocked force during operation of the exciter, acoustic and/or haptic signals may be generated in an efficient and precise manner.

As indicated above, the exciter is typically mechanically coupled to a (rigid) radiation surface, in particular to the front panel of a user interface (of a household appliance). The control unit may be configured to determine property data regarding one or more vibration properties of the radiation surface. The property data may be indicative of a frequency response of the radiation surface (for a plurality of frequencies covering the above-mentioned frequency range). The exciter may be operated also in dependence of the property data. By taking into account property data regarding the radiation surface, the quality of the acoustic and/or haptic signals which are generated by the exciter may be increased further.

The exciter may be mechanically coupled to the radiation surface via a (elastic) mounting layer, in particular via a glue layer. The response data, in particular the frequency response of the blocked force, may be indicative of a resonance of the blocked force of the exciter, which is caused by the mounting layer. This may be achieved by taking into account the mounting layer during measurement of the frequency response. In particular, a mounting layer may be arranged between the exciter and the support structure which is used for measuring the frequency response of the blocked force. The mounting layer may e.g. be arranged between the exciter and the force sensor which is used for determining the frequency response of the blocked force of the exciter.

According to a further aspect, a household appliance (such as a kitchen machine, a dish washer, an oven, a washing machine, a dryer, a refrigerator, etc.) is described. The appliance comprises a user interface with a radiation surface, in particular with a front panel, and an exciter which is mechanically coupled to the radiation surface for causing the radiation surface to emit an acoustic and/or haptic signal. The exciter may comprise a movable coil which is mechanically coupled to the radiation surface.

The household appliance further comprises a control unit (as outlined in the present document) for operating the exciter. The control unit may be configured to generate a coil current through the coil for causing the coil to move and to thereby cause the radiation surface to emit an acoustic and/or haptic signal.

According to another aspect, a system for determining a frequency response of the blocked force of an exciter is described. The frequency response may be used for subsequent operation of the exciter (as described above). The system comprises a control unit which is configured to generate a control signal for operating the exciter (successively) at a plurality of different frequencies, wherein the plurality of frequencies covers a pre-determined frequency range (e.g., the audible frequency range). In particular, the control unit may be configured to generate a control signal which comprises a sequence of successive sinusoidal signals at the plurality of different frequencies (each sinusoidal signal being at (exactly) one of the plurality of different frequencies). In other words, the control signal may comprise the different frequencies in a successive manner.

Furthermore, the system comprises a rigid support structure, wherein the support structure has a weight that is at least 10 times, in particular at least 100 times, higher than the weight of the exciter. In addition, the system comprises a force sensor which is arranged between the exciter and the support structure and which is configured to capture sensor data, subject to operating the exciter using the control signal. The sensor data may be indicative of the force which is applied by the exciter onto the support structure.

The system further comprises an analyzer unit which is configured to determine the frequency response of the blocked force of the exciter based on the sensor data and based on control information regarding the control signal. For this purpose, a time domain to frequency domain transform (such as a Fourier transform) may be applied to the captured sensor data (notably to the time-domain force signal that is provided as sensor data by the force sensor).

Using the system described herein, the frequency response of the blocked force of an exciter may be determined in an efficient and precise manner. Different frequency responses may be determined for different types of exciters. Furthermore, an appropriate exciter may be selected from the different types of exciters based on the different frequency responses. By doing this, the audio quality of a household appliance may be improved in an efficient and reliable manner.

According to another aspect, a method for operating an exciter is described. The method comprises determining response data regarding a frequency response of the blocked force of the exciter. Furthermore, the method comprises operating the exciter in dependence of the response data for generating an acoustic and/or haptic signal.

According to a further aspect, a method for determining a frequency response of the blocked force of an exciter is described. The method comprises generating a control signal for operating the exciter at a plurality of different frequencies, wherein the plurality of frequencies covers a pre-determined frequency range. Furthermore, the method comprises arranging a force sensor between the exciter and a rigid support structure, wherein the support structure has a weight that is at least 10 times, in particular at least 100 times, higher than the weight of the exciter, and capturing sensor data of the force sensor, subject to operating the exciter using the control signal. The sensor data may be indicative of a temporal force signal. The method further comprises determining the frequency response of the blocked force of the exciter, based on the sensor data and based on control information regarding the control signal (wherein the control information may be indicative of the plurality of different frequencies of the control signal).

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows an example household appliance with a user interface comprising a surface exciter;
Figure 1b shows an example user interface comprising a surface exciter;
Figure 2 illustrates an example surface exciter;
Figure 3 an example system for determining the blocked force frequency response of an exciter;
Figure 4 an example blocked force frequency response of an exciter; and
Figure 5 a method for controlling an exciter of a household appliance.

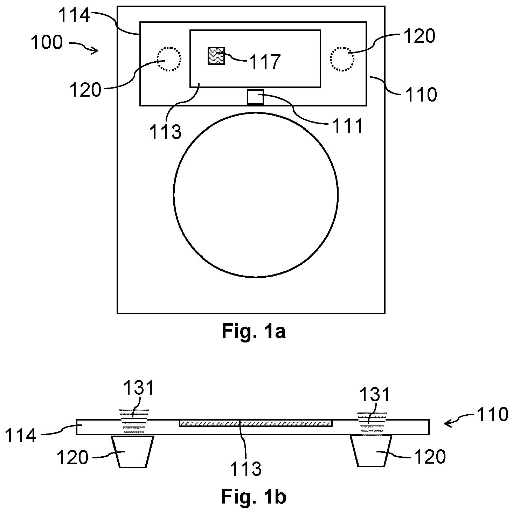

As outlined above, the present document is directed at generating acoustic and/or haptic signals within a household appliance in an efficient and precise manner. In this context, Fig. 1a shows an example household appliance 100 with a user interface 110. The user interface 110 includes a touch-sensitive screen 113 on which one or more virtual control elements 117 can be deployed. The screen 113 is typically located on a front panel 114 of the household appliance 100 or of the user interface 110.

A control element 117 which is displayed on the screen 113 can be actuated by a user of the household appliance 100. The actuation of the control element 117 can be detected by a control unit 111 of the user interface 110. In response to this, at least one surface exciter 120 of the user interface 110 can be induced to emit a haptic and/or acoustic signal, in order to provide the user with a haptic and/or acoustic feedback regarding the actuation of the control element 117. By doing this, the comfort and the reliability of the operation of a household appliance 100 can be increased.

Fig. 1b shows the front panel 114 of a user interface 110 in a side view. It can be seen from Fig. 1b that one or more exciters 120 are typically located behind the front panel 114 and may be connected to the back of the front panel 114 in order to stimulate the front panel 114 to vibrate for generating a haptic and/or acoustic signal 131.

The control unit 111 may be configured to determine that a haptic and/or acoustic signal 131 (e.g. for haptic and/or acoustic feedback in response to the actuation of a control element 117) should be output. Furthermore, the control unit 111 may be configured to cause the one or more exciters 120 to output the haptic and/or acoustic signal 131.

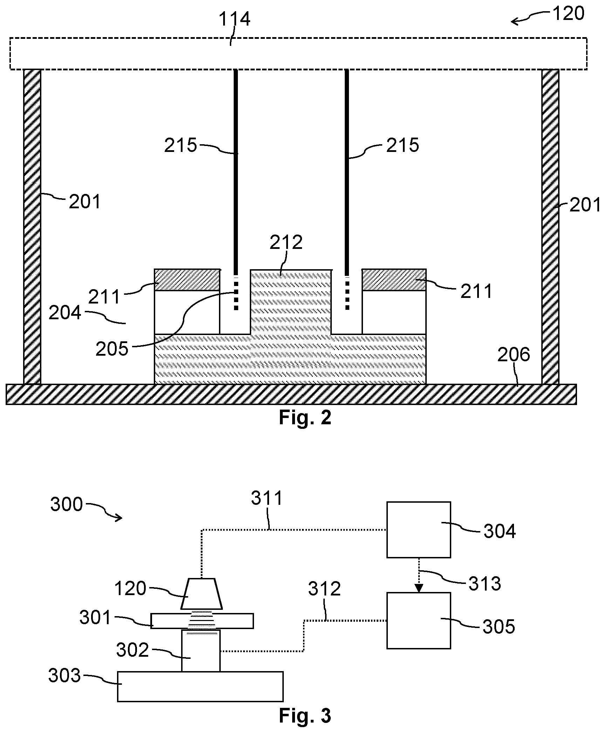

Fig. 2 shows an example exciter 120 having a magnet 204 and a coil 205 which is attached to a coil carrier 215. The coil carrier 215 may be mechanically fixed to the front panel 114 (e.g. using a mounting layer, such as a glue layer). By doing this, vibrations, notably relatively low-frequency vibrations, can be transmitted to the front panel 114 by moving the coil carrier 215 and/or the coil 205, thereby generating a haptic and/or acoustic signal 131.

The magnet 204 has two different poles 211, 212, which are configured to generate a (constant and/or permanent) magnetic field in a (ring-shaped) cavity. The coil 205 may be located within the cavity, and may be configured to move along a direction of oscillation, which is perpendicular to the front panel 114, so that the coil 205 penetrates more or less deeply into the cavity. The magnet 204 may be attached to a rear panel 206 of the exciter 120, wherein the rear panel 206 may be attached to the front panel 114 via one or more attachment elements 201 (wherein the one or more attachment elements 201 may be flexible, in order to allow for a movement of the exciter 120).

The control unit 111 may be configured to determine a control signal to generate a specific haptic and/or acoustic signal 131. Furthermore, the control unit 111 may be configured to cause a coil current through the coil 205 in dependence of the control signal, so that the coil 205 causes a time-varying magnetic field. The magnetic field caused by coil 205 interacts with the magnetic field of the magnet 204 and thus causes the coil 205 to move along the direction of oscillation. The movement of coil 205 causes vibrations of the front panel 114 and thus a haptic and/or acoustic signal 131 at the front panel 114.

The qualification of the acoustical and/or vibration properties of an exciter 120 may be challenging, in particular, if the solid radiation surface 114 to which the exciter 120 should be connected is not yet available. In the present document, a method is described which allows the dynamic properties of an exciter 120 to be determined in an efficient and reliable manner. The method makes use of so-called blocked forces.

Blocked forces are the forces which are generated by a device, such as an exciter 120. Blocked forces are typically independent of the presence of any other component or receiver system. To measure the blocked forces of an exciter 120, the output, in particular the coil carrier 215, of the exciter 120 may be clamped or blocked, as illustrated in Fig. 3 (such that the coil carrier 215 cannot move). This may be achieved by coupling the exciter 120, in particular the coil carrier 215, to a support structure 303 which is rigid and which is heavy compared to the exciter 120, e.g., which has a weight that is by a factor 100 or more higher than the weight of the exciter 120. Dynamic rigidity of the support structure 303 can be verified by a transmissibility impact test.

Between the exciter 120 and support structure 303, a dynamic (possibly uniaxial) force sensor 302 is placed. The exciter 120 may be connected to the force sensor 302 via a flat, relatively light and preferably non-magnetic plate 301. The exciter 120 may be connected to the plate 301 via its intended mounting layer, such glued tape.

The measurement system 300 of Fig. 3 comprises an analyser unit 305 which is configured to collect sensor data 312 from the force sensor 302. Furthermore, the measurement system 300 may comprise a control unit 304 which is configured to generated a control signal 311 for controlling the exciter 120. The control signal 311 may have a pre-determined electrical input power (e.g. 1W). The control signal 311 may correspond to the coil current through the coil 205. The control signal 311 may be a sinusoidal signal with a certain frequency. The frequency of the control signal 311 may be varied, in particular increased, to generate a sine sweep excitation of the exciter 120 over a pre-determined frequency range. Control information 313 regarding the control signal 311, such as the frequency of the control signal 311, may be provided to the analyser unit 305.

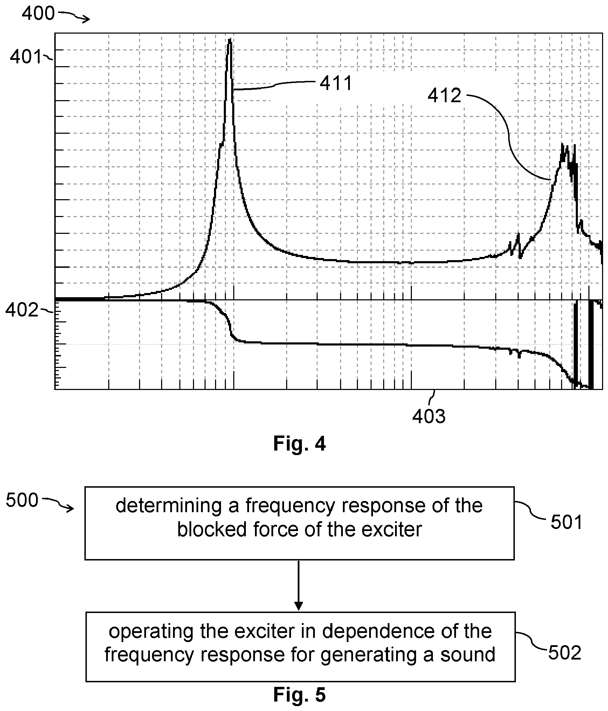

The analyser unit 305 may be configured to determine a frequency response spectrum 400 of the exciter 120 based on the sensor data 312 and based on the control information 313, as illustrated in Fig. 4. The response spectrum 400 may also be referred to as a (broadband) blocked force spectrum. The response spectrum 400 may indicate the magnitude 401 of the blocked force (which is caused by the exciter 120 and which is measured by the force sensor 302) as a function of the frequency 403 of the control signal 311. Furthermore, the response spectrum 400 may indicate the phase 402 of the blocked force (relative of the phase of the control signal 311)) as a function of the frequency 403.

The magnitude 401 may exhibit a peak 411 at a certain resonance frequency, wherein the peak 411 may be due to the mass of the exciter 120, notably of the coil carrier 215 and/or the coil 205. Furthermore, the magnitude 401 may exhibit a peak 412 at a higher resonance frequency, which may be due to the glue layer for fixing the exciter 120 to the plate 301.

Hence, a method for determining information regarding the dynamic properties of an exciter 120 is described. The method comprises coupling the exciter 120 to a (rigid and heavy) support structure 303 via a force sensor 302. Furthermore, the method comprises capturing sensor data 312 of the force sensor 302 subject to operating the exciter 120 using a control signal 311, wherein the control signal 311 may be a sinusoid signal at a pre-determined frequency 403. Sensor data 312 may be captured for control signals 311 at a plurality of different frequencies 403, wherein the frequencies 403 preferably cover a certain (audible) frequency range. In particular, sensor data 312 may be captured for a sine sweep. Based on the sensor data 312, the blocked force frequency response 400 of the exciter 120 may be determined, as a precise indication of the dynamic properties of the exciter 120. The blocked force frequency response 400 may be used during operation of the exciter 120 for enabling the exciter 120 to generate acoustic and/or haptic signals 131 in an efficient and precise manner.

The blocked force spectrum 400 of the exciter 120 is a reliable means for qualifying the exciter 120 for its use within one or more different household appliances 100. The blocked force spectrum 400 may be used to compare different types of exciters 120. Furthermore, the blocked force spectrum 400 may be used to predict the acoustic and/or lifetime performance of an exciter 120. The blocked force spectrum 400 of an exciter 120 may be used in conjunction with the numerically simulated dynamic behaviour of a radiation surface 114, in order to predict the acoustic properties of a user interface 110 of a household appliance 100. Furthermore, the blocked force spectrum 400 of an exciter 120 may be determined in an efficient manner (without the use of a microphone and/or a special acoustically controlled measurement environment).

Fig. 5 shows a flow chart of a (possibly Computer-implemented) method 500 for operating an exciter 120. The exciter 120 may be part of a household appliance 100. Alternatively, or in addition, the exciter 120 may be used for generating an acoustic and/or a haptic signal 131. For this purpose, the exciter 120 may be coupled to a radiation surface 114, e.g. to the front panel of the household appliance 100. In particular, the exciter 120 may be configured to cause vibrations of the radiation surface 114, thereby generating an acoustic and/or a haptic signal 131.

The method 500 comprises determining 501 response data regarding the frequency response 400 of the blocked force of the exciter 120. The frequency response 400 may have been determined using the measurement system 300 described in the context of Fig. 3. The frequency response 400 may be indicative of the magnitude 401 and/or the phase 402 of the blocked force of the exciter 120 as a function of frequency 403. The frequency response 400 may cover the audible frequency range (audible for a human being), e.g. 20Hz up to 4kHz or up to 12kHz.

The method 500 further comprises operating 502 the exciter 120 in dependence of the response data for generating an acoustic and/or haptic signal 131. In particular, a target (acoustic and/or haptic) signal may be modified using the response data, notably the frequency response 400.The frequency spectrum of the target signal may be modified using the response data, in particular the frequency response 400 of the blocked force of the exciter 120, in order to generate the control signal 311 for controlling the exciter 120. The control signal 311 may be indicative of or may correspond to the coil current of the coil 205 of the exciter 120.

By taking into account the frequency response 400 of the blocked force of the exciter 120 during operation of the exciter 120, acoustic and/or haptic signals 131 may be generated in an efficient, precise and robust manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (111) for operating an exciter (120); wherein the control unit (111) is configured to
- determine response data regarding a frequency response (400) of the blocked force of the exciter (120); and
- operate the exciter (120) in dependence of the response data for generating an acoustic and/or haptic signal (131).

2. The control unit (111) of claim 1, wherein the response data is indicative of a magnitude (401) of the blocked force of the exciter (120) for a plurality of different frequencies (403) of a control signal (311) for operating the exciter (120).

3. The control unit (111) of claim 1, wherein
- the plurality of frequencies (403) covers a pre-determined frequency range; and
- the frequency range goes from 20 Hz up to 4 kHz, in particular up to 12kHz.

4. The control unit (111) of any of the previous claims, wherein
- the response data is indicative of a phase (402) of the blocked force of the exciter (120) for a plurality of different frequencies (403) of a control signal (311) for operating the exciter (120); and
- the phase (402) of the block force is in particular relative to a phase of the control signal (311).

5. The control unit (111) of any of the previous claims, wherein the response data is indicative of a magnitude (401) and/or a phase (402) response of the blocked force of the exciter (120) subject to a sine sweep excitation of the exciter (120).

6. The control unit (111) of any of the previous claims, wherein
- the exciter (120) is mechanically coupled to a radiation surface (114), in particular to a front panel of a user interface (110); and
- the control unit (111) is configured to
- determine property data regarding one or more vibration properties of the radiation surface (114); and
- operate the exciter (120) in dependence of the property data.

7. The control unit (111) of any of the previous claims, wherein
- the exciter (120) is mechanically coupled to a radiation surface (114) via a mounting layer, in particular a glue layer; and
- the response data is indicative of a resonance of the blocked force, which is caused by the mounting layer.

8. The control unit (111) of any of the previous claims, wherein the control unit (111) is configured to
- determine target data regarding a target acoustic and/or haptic signal which is to be emitted from a radiation surface (114) to which the exciter (120) is coupled; and
- operate the exciter (120) in dependence of the target acoustic and/or haptic signal.

9. The control unit (111) of any of the previous claims, wherein the response data has been measured by attaching the exciter (120) or an exciter (120) of the same model to a support structure (303) having a weight which is substantially higher than a weight of the exciter (120), in particular having a weight which is at least 100 times higher than the weight of the exciter (120).

10. A household appliance (100) comprising
- a user interface (110) with a radiation surface (114), in particular with a front panel;
- an exciter (120) which is mechanically coupled to the radiation surface (114) for causing the radiation surface (114) to emit an acoustic and/or haptic signal (131); and
- a control unit (111) according to any of the previous claims for operating the exciter (120).

11. The household appliance (100) of claim 1, wherein
- the exciter (120) comprises a movable coil (205) which is mechanically coupled to the radiation surface (114); and
- the control unit (111) is configured to generate a coil current through the coil (205) for causing the coil (205) to move and to thereby cause the radiation surface (114) to emit an acoustic and/or haptic signal (131).

12. A method (500) for operating an exciter (120); wherein the method (500) comprises,
- determining (501) response data regarding a frequency response (400) of the blocked force of the exciter (120); and
- operating (502) the exciter (120) in dependence of the response data for generating an acoustic and/or haptic signal (131).

13. A system (300) for determining a frequency response (400) of the blocked force of an exciter (120); wherein the system (300) comprises
- a control unit (304) configured to generate a control signal (311) for operating the exciter (120) at a plurality of different frequencies (403); wherein the plurality of frequencies (403) covers a pre-determined frequency range;
- a rigid support structure (303); wherein the support structure (303) has a weight that is at least 10 times, in particular at least 100 times, higher than a weight of the exciter (120);
- a force sensor (302) which is arranged between the exciter (120) and the support structure (303) and which is configured to capture sensor data (312), subject to operating the exciter (120) using the control signal (311); and
- an analyzer unit (305) configured to determine the frequency response (400) of the blocked force of the exciter (120) based on the sensor data (312) and based on control information (313) regarding the control signal (311).

14. The system (300) of claims 13, wherein the control unit (304) is configured to generate a control signal (311) which comprises a sequence of successive sinusoidal signals at the plurality of different frequencies (403).

15. A method for determining a frequency response (400) of the blocked force of an exciter (120); wherein the method comprises
- generating a control signal (311) for operating the exciter (120) at a plurality of different frequencies (403); wherein the plurality of frequencies (403) covers a pre-determined frequency range;
- arranging a force sensor (302) between the exciter (120) and a rigid support structure (303); wherein the support structure (303) has a weight that is at least 10 times, in particular at least 100 times, higher than a weight of the exciter (120);
- capturing sensor data (312) of the force sensor (302), subject to operating the exciter (120) using the control signal (311); and
- determining the frequency response (400) of the blocked force of the exciter (120) based on the sensor data (312) and based on control information (313) regarding the control signal (311).
